# DEMANDE DE BREVET EUROPEEN

(11) **EP 1 986 191 A1**
(43) Date de publication de la demande: **29.10.2008**
(21) Numéro de dépôt: 08154919.8
(22) Date de dépôt: 22.04.2008
(51) Int. Cl.: G11B 20/10, G11B 20/14, G11B 7/005

(54) **Procédé de lecture d'informations optiques en super-résolution**

(30) Priorité: 27.04.2007 FR 0703098
(71) Demandeur: COMMISSARIAT A L'ENERGIE ATOMIQUE, 75015 Paris (FR)
(72) Inventeur: Fargeix, Alain, 38240 Meylan (FR); Lemonnier, Olivier, 38660 La Terrasse (FR); Poupinet, Ludovic, 38360 Sassenage (FR)
(74) Mandataire: Guérin, Michel

(57) **Abrégé**

L'invention concerne la lecture d'enregistrements optiques numériques à très haute densité (CD, DVD, etc).

La lecture est faite par une technique PRML ("Partial Response Maximum Likelihood") qui utilise un modèle de réponse analogique à l'enregistrement d'un bit d'information isolé. Habituellement, le modèle de réponse est représenté par 4 ou 5 échantillons de signal ayant des niveaux normalisés 1 ou 2. Pour tenir compte de phénomènes particuliers de la lecture en super-résolution, l'invention propose d'utiliser un modèle ayant 6 à 10 échantillons pouvant prendre quatre ou cinq niveaux normalisés. Ce modèle peut résulter de la superposition de deux modèles plus simples n'ayant que deux niveaux possibles d'échantillons pris parmi 1, 2 et 3.

## Description

L'invention concerne la lecture d'enregistrements optiques numériques à très haute densité (CD, DVD, etc).

Lorsqu'on cherche à accroître la densité d'informations enregistrées sur un disque optique, on est en général limité par les performances du dispositif de lecture des informations. Le principe de base est que l'on ne peut que très difficilement lire des informations physiques inscrites dans le disque si leur dimension est inférieure à la limite de résolution du système optique qui servira à lire ces informations. Typiquement, avec une lecture par un laser rouge de longueur d'onde 650nm et une ouverture numérique de 0,6 on ne peut normalement pas espérer lire correctement des informations de dimension inférieure à 0,4 micromètre, à la rigueur 0,3 micromètre.

Cependant, des méthodes dites de super-résolution ont été imaginées pour lire des informations dont la dimension physique est inférieure, voire même très inférieure, à la longueur d'onde. Ces méthodes se fondent sur les propriétés optiques non-linéaires de certains matériaux. Par propriétés non-linéaires, on entend le fait que certaines propriétés optiques du matériau changent en fonction de l'intensité de la lumière qu'ils reçoivent. Le laser de lecture lui-même va modifier localement de façon réversible les propriétés optiques du matériau par des effets thermiques, optiques, thermo-optiques et/ou optoélectroniques sur des dimensions plus petites que la dimension du spot laser de lecture ; du fait du changement de propriété, une information optique présente dans ce très petit volume devient détectable alors qu'elle n'aurait pas été détectable sans ce changement.

Le phénomène qu'on exploite est fondé principalement sur deux propriétés du laser de lecture qu'on va utiliser :
- d'une part le laser est focalisé très fortement de manière à présenter une section extrêmement petite (de l'ordre de la longueur d'onde) mais dont la distribution de puissance est gaussienne, très forte en son centre, très atténuée à la périphérie,
- et d'autre part, on choisit une puissance de laser de lecture telle que la densité de puissance sur une petite partie de la section, au centre du faisceau, modifie significativement une propriété optique de la couche, alors que la densité de puissance en dehors de cette petite portion de section ne modifie pas significativement cette propriété optique ; la propriété optique est modifiée dans un sens tendant à permettre la lecture d'une information qui ne serait pas lisible sans cette modification.

Par exemple, la propriété optique qui change est une augmentation de la transmission optique dans le cas où la lecture d'un bit constitué par une marque physique formée sur le disque optique nécessite une transmission du faisceau laser jusqu'à cette marque physique. La couche non-linéaire est alors interposée sur le trajet du faisceau vers la marque physique. Le centre du faisceau laser va pouvoir traverser la couche jusqu'à la marque, du fait qu'en traversant la couche l'intensité de la lumière incidente la rend plus transparente, alors que la périphérie du faisceau ne va pas traverser car elle ne modifie pas suffisamment les indices optiques de la couche pour la rendre plus transparente. Tout se passe alors comme si on avait utilisé un faisceau focalisé sur un diamètre beaucoup plus étroit que ce que permet sa longueur d'onde.

Diverses propositions théoriques ont été formulées pour mettre en oeuvre ces principes, mais aucune n'a donné lieu à un développement industriel. Le brevet US 5 153 873 rappelle la théorie. Le brevet US 5 381 391 donne l'exemple d'un film ayant des propriétés de réflectivité non-linéaires. Le brevet US 5 569 517 propose divers matériaux à changement de phase cristalline.

Par ailleurs, il est connu que la lecture d'informations numériques très denses (marques très rapprochées dans le sens du défilement des marques sous le faisceau laser ou marques très courtes dans ce sens) est difficile à faire sans erreur par simple détection d'un dépassement de seuil de tension électrique du signal issu de la lecture.

En effet, en supposant même qu'on soit capable d'enregistrer des marques de forme bien carrée définissant des informations binaires 0 ou 1 (par exemple 0 en l'absence d'un trou dans une couche physique, 1 en présence d'un trou), le signal de lecture qui résulte du défilement de ces marques n'est pas un signal carré mais un signal déformé du fait de la bande passante limitée du système de lecture. Et de toutes façons on ne sait pas enregistrer des marques parfaitement carrées du fait des méthodes physiques employées pour enregistrer ces marques.

La combinaison de cette imperfection des marques physiques et de l'imperfection des systèmes de lecture se traduit par un signal de tension de forme très dégradée pour représenter une information qui devrait être très carrée (information purement binaire). Et ce signal de tension de forme très dégradée est d'autant plus déformé et difficile à interpréter que les marques sont plus rapprochées ; par exemple, au lieu d'avoir des pics de tension très marqués, bien localisés dans le temps à chaque transition binaire, et faciles à détecter par un détecteur de seuil de tension, on s'aperçoit que le signal de lecture comporte des creux ou des bosses peu marqués aux endroits de ces transitions binaires ; l'amplitude de ces creux ou ces bosses et leur localisation temporelle sont de plus très dépendantes de la succession de marques qui précède la marque qu'on veut détecter.

Dans l'art antérieur, on a proposé des méthodes de traitement électronique plus sophistiquées du signal de lecture ; ces méthodes permettent, pour une densité d'informations donnée, de mieux décoder l'information binaire à partir d'un signal de lecture très déformé, ou alternativement elles permettent d'enregistrer et de relire des informations à une densité plus élevée que ce qu'autorisent les méthodes à simple détection de seuil. Ces méthodes plus sophistiquées sont appelées méthodes PRML, de l'anglais "Partial Response Maximum Likelihood" ou "Maximum de Vraisemblance de Réponse Partielle ". Elles reposent sur :
- l'estimation théorique des formes de réponse que peut prendre le signal en sortie du canal de traitement lorsque ce canal reçoit différents modèles de successions d'informations binaires (Réponse Partielle PR),
- et sur la comparaison entre le signal de sortie effectivement détecté et les différentes formes de réponse théoriques pour déterminer quelle est la succession d'informations binaires qui a le plus probablement été émise à l'entrée du canal pour donner ce signal en sortie (Maximum de Vraisemblance ML).

Lorsqu'on parle de canal de traitement d'une information binaire, il s'agit de l'ensemble des traitements électroniques et physique ou chimiques qui vont de l'écriture de l'information binaire dans le disque à la lecture de cette information sous forme d'un signal électrique analogique. En effet, c'est en amont de l'écriture qu'on dispose d'une information binaire à enregistrer, mais l'écriture elle-même dégrade le caractère binaire de l'information (les marques physiques enregistrées ont des formes qui ne sont pas rectangulaires) et la lecture dégrade aussi, et généralement encore plus, ce caractère.

Dans les systèmes de lecture envisagés pour la lecture des disques optiques, que ce soit avec un laser rouge ou avec un laser bleu (le laser bleu permettant la lecture d'informations de plus haute résolution), on a proposé d'utiliser des méthodes PRML dans lesquelles la forme d'onde de réponse d'un bit d'information isolé (en pratique une transition binaire isolée) est assimilée à une forme gaussienne centrée sur un instant caractéristique définissant la position temporelle du bit. Cette forme gaussienne est ensuite modélisée par une succession de P échantillons de valeurs non nulles prises parmi N valeurs possibles. Les nombres P et N sont petits (quelques unités) pour que les calculs PRML soient raisonnables en quantité ; une approximation par un plus grand nombre de valeurs N est plus exacte mais demande plus de calculs ; une approximation avec un plus grand nombre d'échantillons P serait meilleure mais demande une fréquence d'échantillonnage plus grande donc des calculs plus rapides. Etant donné que les nombres N et P sont petits, le modèle obtenu est très sommaire et on utilisera parfois l'appellation "caricature" pour désigner ce modèle d'une réponse binaire ou le modèle d'une réponse à une succession de bits, et on utilisera le verbe "caricaturer" pour désigner le calcul d'un modèle théorique d'un bit d'information ou d'une succession de bits d'information.

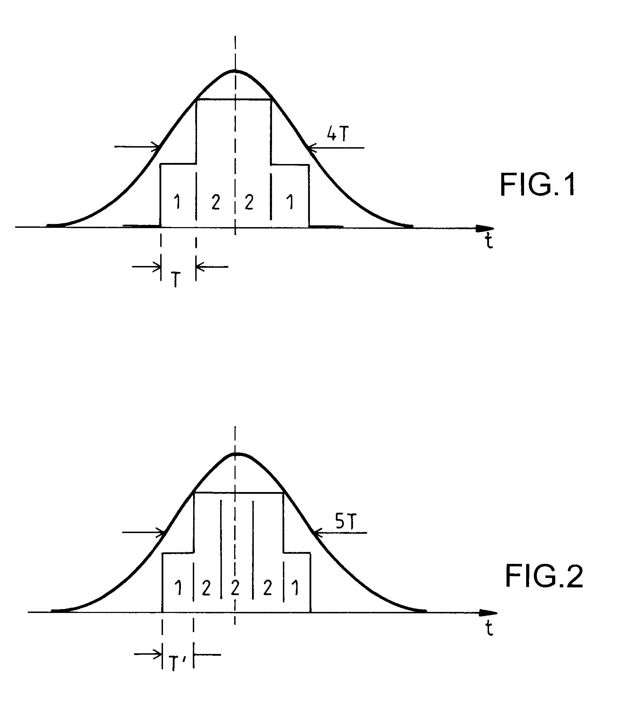

La figure 1 représente un exemple typique de forme de réponse théorique gaussienne pour une transition binaire isolée, ainsi que le modèle caricatural utilisant P = 4 échantillons non nuls pouvant prendre seulement N=2 valeurs normalisées 1 et 2. Ces valeurs P=4 et N=2 sont classiquement utilisées, la gaussienne étant caricaturée par la succession de quatre valeurs numériques non nulles successives qui sont 1, 2, 2, 1. La fréquence d'échantillonnage est F, et la période d'échantillonnage est T=1/Fe (un échantillon à chaque période T). Pour une lecture adéquate des informations binaires en utilisant une méthode PRML avec ce type de forme de réponse analogique gaussienne théorique pour une transition binaire isolée et ce type de modélisation numérique de la réponse, on peut prévoir que la période d'échantillonnage est égale à un quart de la largeur à mi-hauteur de la courbe gaussienne. C'est ce qui est représenté sur la figure 1. Et on s'aperçoit alors que l'on peut récupérer une information binaire enregistrée sur le disque à la condition que les transitions binaires successives soient espacées d'au moins deux fois la période d'échantillonnage (2T). En dessous de cette valeur, les transitions seraient trop rapprochées pour pouvoir être lues avec une sécurité suffisante.

Un autre exemple de caricature de forme d'onde gaussienne est représenté à la figure 2 avec P=5 et N=2. Le modèle ou caricature est maintenant 1, 2, 2, 2, 1. II donne des résultats un peu meilleurs que le modèle 1, 2, 2, 1 et est proposé, de même que le précédent, dans les normes BD (Bluray Disc) et HD_DVD ROM.

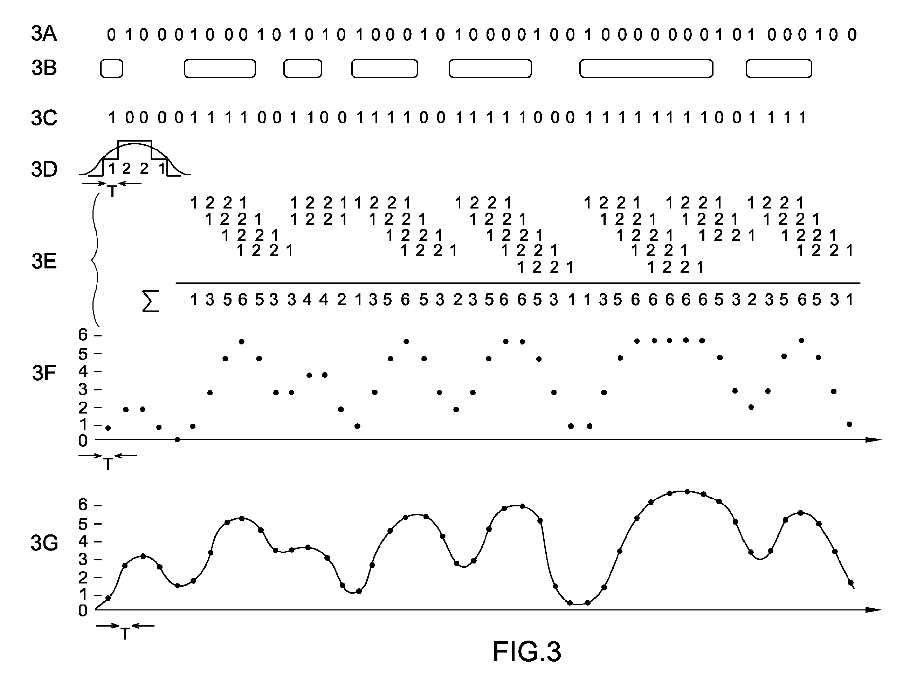

La figure 3 (3A à 3F) rappelle le principe d'une méthode PRML.

En ligne 3A, on a représenté une séquence binaire d'informations à écrire, codée par un nombre variable de bits qui conservent une même valeur entre deux transitions binaires (code RLL). La durée d'un bit lors de la relecture des informations enregistrées est supposée ici égale à la période d'échantillonnage T utilisée dans la méthode PRML, mais la séquence binaire est classiquement telle qu'il y a toujours au moins deux bits consécutifs identiques.

En ligne 3B est représentée la succession de marques physiques enregistrées à partir de cette séquence : marques de longueur correspondant au nombre de bits entre deux transitions suivie d'un intervalle entre marques, l'intervalle ayant une longueur correspondant au nombre de bits avant la transition suivante. Les longueurs de marques comme les distances entre marques représentent alors, sous un autre code que le code RLL de départ, les informations binaires stockées. La longueur d'une marque peut être exprimée en durée, et plus précisément en nombre entier de périodes T, les marques défilant à vitesse constante sous le faisceau laser de lecture, la valeur T représentant la durée d'un bit.

En ligne 3C est représentée l'information numérique codée correspondant aux marques physiques : une marque présente est un 1, une absence de marque (ou intermarque ou marque de polarité inverse) est un zéro.

En ligne 3D est représenté le modèle de réponse classique pour un bit 1 isolé ; l'exemple choisi est celui du modèle 1,2,2,1 de la figure 1 ; la réponse pour un bit zéro (absence de marque) est supposée nulle.

Dans le groupe de lignes désigné par 3E, est représentée la succession des modèles numériques successifs 1,2,2,1 que va engendrer la présence de chacun des bits de chacune des marques successives alors que la longueur du modèle (4T) est plus grande que la longueur d'un bit (T) : les modèles se chevauchent et le modèle résultant d'une succession de bits 1 est l'addition des valeurs numériques décalées dans le temps résultant de ces chevauchements multiples. Le résultat de cette addition numérique est inscrit en dernière ligne du groupe 3E.

En ligne 3F on a représenté la succession temporelle des valeurs numériques résultant de ce chevauchement et de cette addition. Les valeurs numériques s'étendent sur une échelle allant de 0 à 6, le nombre 6 étant le plafond qui résulte du chevauchement pour les valeurs P=4 et N=2. L'échelle irait de 0 à 8 pour P=5 et N=2.

En ligne 3G on a représenté un signal de lecture réel qui correspond à la lecture des marques qui ont été enregistrées à partir de la séquence binaire de la ligne 3A, ainsi que les valeurs numériques résultant d'un échantillonnage de ce signal à la fréquence Fe = 1/T où T est la durée théorique d'un bit, compte-tenu de la longueur d'une marque physique correspondant à un bit et de la vitesse de rotation du disque sous le faisceau laser de lecture. Le signal de lecture est normalisé avec une échelle (0 à 6) semblable à celle du modèle théorique de la figure 3F pour que la comparaison soit possible.

La technique PRML consiste à recueillir une succession de K échantillons du signal analogique résultant d'une lecture réelle ; à calculer toutes sortes de successions théoriques prédéterminées du type de celle de la ligne 3A (donc pour toutes sortes de successions binaires possibles qui pourraient avoir été enregistrées alors qu'on ne sait pas laquelle a été véritablement enregistrée) ; à mesurer la ressemblance entre la succession reçue et chacune des successions calculées, et à en déduire quelle était probablement la séquence binaire de départ compte-tenu de la meilleure ressemblance trouvée.

La ressemblance est calculée de préférence par la méthode dite des moindres carrés dans laquelle :
- on calcule, pour une succession d'échantillons déterminée, la somme des carrés des différences entre chaque échantillon de la succession reçue et l'échantillon correspondant de la succession calculée,
- on recommence pour toutes les successions calculées possibles,
- on compare les différentes sommes de carrés calculées,
- et on sélectionne parmi toutes les successions binaires possibles celle qui donne la plus petite somme de carrés ; on considère que cette succession binaire est bien la séquence qui était enregistrée dans le disque, parce que la réponse théorique calculée pour cette succession est celle qui ressemble le plus au signal de lecture sur la base du critère des moindres carrés.

Selon l'invention, on a trouvé que les caricatures usuelles (1,2,2,1 ou 1,2,2,2,1) de formes de réponse partielle PR n'étaient pas optimales pour permettre un décodage correct des signaux lus lorsque les marques physiques sont des très petites marques destinées à être lues en super-résolution, c'est-à-dire des marques pouvant être lues par un faisceau laser de lecture dont la partie centrale seule est assez puissante pour modifier les propriétés optiques des marques sans que la périphérie du faisceau soit assez puissante pour autoriser cette modification.

L'invention repose sur l'intuition que dans le cas de la super-résolution il ne suffit pas d'augmenter la fréquence d'échantillonnage Fe donc réduire le temps T pour tenir compte de la plus petite taille des marques et d'une plus grande étroitesse du faisceau véritablement utile. En effet, bien que la partie véritablement active du faisceau laser en super-résolution soit beaucoup plus étroite, il n'en reste pas moins que le faisceau existe bien même en dehors de sa partie centrale, et il s'étend alors sur un plus grand nombre de marques même s'il n'a pas la même activité optique à sa périphérie et en son centre.

On propose de modifier le nombre P d'échantillons non nuls définissant le modèle caricaturé et/ou le nombre N représentant le nombre de niveaux discrets possibles non nuls dans le modèle de réponse, en renforçant significativement la hauteur de la partie centrale du modèle, sans pour autant aller jusqu'à un nombre P ou un nombre N qui rendraient les calculs de vraisemblance trop lourds pour autoriser une lecture en temps réel. Selon l'invention, on propose de caricaturer le modèle de réponse d'un bit isolé par la superposition d'un premier modèle simple caricaturant une gaussienne représentative de la distribution spatiale d'énergie d'un faisceau laser de lecture et d'un deuxième modèle simple caricaturant une gaussienne plus étroite que la première et représentative d'une action optique supplémentaire limitée à la partie centrale du faisceau laser.

Ainsi, l'invention concerne un procédé de lecture d'informations numériques inscrites dans des couches d'un support de stockage optique d'informations pouvant être lu en super-résolution à partir d'un système optoélectronique comprenant un faisceau laser de lecture dont la densité de puissance en son centre est suffisante pour engendrer une modification locale des propriétés optiques d'au moins une des couches sur une zone plus petite que la résolution du système optoélectronique, le procédé comportant la modélisation de la réponse fournie par des séquences binaires variées à partir de la modélisation de la réponse partielle fournie par un bit d'information isolé, et la recherche du maximum de ressemblance entre une séquence d'échantillons issus de la lecture des informations et les réponses des séquences variées modélisées, ce procédé étant caractérisé en ce que le modèle correspondant à un bit isolé, à partir duquel sont établis les modèles pour les séquences binaires variées, est constitué par la superposition d'un premier modèle simple caricaturant une gaussienne représentative de la distribution spatiale d'énergie d'un faisceau laser de lecture et d'un deuxième modèle simple caricaturant une gaussienne plus étroite que la première et représentative d'une action optique supplémentaire limitée à la partie centrale du faisceau laser.

Pour y parvenir efficacement, on a trouvé qu'il fallait de préférence constituer le modèle caricaturé d'un bit isolé à l'aide de P échantillons de valeurs non nulles où les valeurs non nulles sont prises parmi N valeurs possibles, le nombre P étant d'au moins 6 (de préférence entre 7 et 10) et le nombre N étant compris entre 3 et 5.

Par conséquent, en d'autres mots, l'invention concerne un procédé de lecture d'informations numériques inscrites dans des couches d'un support de stockage optique d'informations pouvant être lu en super-résolution à partir d'un système optoélectronique comprenant un faisceau laser de lecture dont la densité de puissance en son centre est suffisante pour engendrer une modification locale des propriétés optiques d'au moins une des couches sur une zone plus petite que la résolution du système optoélectronique, le procédé comportant la modélisation de la réponse fournie par des séquences binaires variées à partir de la modélisation de la réponse partielle fournie par un bit d'information isolé, et la recherche du maximum de ressemblance entre une séquence d'échantillons issus de la lecture des informations et les réponses des séquences variées modélisées, ce procédé étant caractérisé en ce que le modèle correspondant à un bit isolé, à partir duquel sont établis les modèles pour les séquences binaires variées, est constitué par P échantillons de valeurs non nulles où les valeurs non nulles sont prises parmi N valeurs possibles, le nombre P étant d'au moins 6 (de préférence entre 7 et 10), le nombre N étant compris entre 3 et 5

II est préférable selon l'invention que le modèle soit constitué par la superposition additive de deux modèles simples (caricatures de gaussiennes de deux largeurs différentes) ayant chacun deux niveaux non nuls possibles, l'un ayant un nombre P₂ d'échantillons (par exemple 3 ou 4) plus petit (de préférence voisin de la moitié) que le nombre P₁ d'échantillons (par exemple 7 ou 8) de l'autre. Les échantillons du deuxième modèle sont pris aux mêmes instants que des échantillons du premier modèle (en principe parmi les instants d'échantillonnage les plus rapprochés du centre du premier modèle). De ces choix il résulte un modèle avec un pic central plus marqué que dans le cas des modèles de gaussiennes simples de l'art antérieur, ce pic représentant l'effet de super-résolution au centre du faisceau laser.

De préférence, le premier modèle comporte P₁ = 7 ou 8 échantillons non nuls avec N₁ = 2 valeurs nominales qui sont les valeurs 1 et 2 et le deuxième modèle comporte P₂ = 3 ou 4 échantillons non nuls avec N₂ = 2 valeurs nominales prises parmi les valeurs 1, 2 et 3. En pratique le modèle complet comporte de préférence 7 ou 8 échantillons de valeurs nominales pouvant aller soit de 1 à 4, soit de 1 à 5.

Les modèles à 10 échantillons 1,1,2,3,4,4,3,2,1,1 ou 1,1,2,3,5,5,3,2,1,1 sont les modèles préférés dans le cas d'un modèle ayant un nombre d'échantillons pairs. Le modèle 1,1,2,3,4,3,2,1,1 à neuf échantillons est le modèle préféré dans le cas d'un nombre d'échantillons impair.

Ces modèles, qui ne sont pas des caricatures de simples courbes gaussiennes, rendent mieux compte du comportement du canal de traitement d'information dans le cas d'un enregistrement destiné à être lu en super-résolution.

Le modèle caricaturé pour un bit isolé peut également être dissymétrique, constitué par la superposition de deux modèles simples symétriques dont l'un est décalé en avance ou en retard (d'une ou deux périodes d'échantillonnage) par rapport au centre de symétrie temporelle de l'autre.

D'autres caractéristiques et avantages de l'invention apparaîtront à la lecture de la description détaillée qui suit et qui est faite en référence aux dessins annexés dans lesquels :
- la figure 1, déjà décrite, représente un exemple typique de forme de réponse standard gaussienne pour une transition binaire isolée, ainsi que le modèle caricatural utilisant P = 4 échantillons non nuls et N=2 niveaux de codage 1 et 2 ;
- la figure 2, déjà décrite, représente un autre exemple de modélisation de la même forme de réponse analogique, mais cette fois par P = 5 échantillons non nuls et N=2 niveaux de codage ;
- la figure 3, déjà décrite représente le principe d'une méthode de lecture par traitement PRML ;
- la figure 4 représente une séquence binaire particulière d'informations inscrites dans un disque et une forme de signal analogique typique qui pourrait être issu d'une tête de lecture optique reproduisant cette séquence binaire dans le cas d'une lecture classique ;
- la figure 5 représente un signal numérique caricaturant la séquence binaire de la figure 4 lorsqu'on utilise le modèle de la figure 1 ;
- la figure 6 représente un signal caricaturant une séquence binaire avec des marques et espacements beaucoup plus courts ;
- la figure 7 représente un modèle proche de celui de la figure 1 avec une période d'échantillonnage divisée par deux et un nombre d'échantillons multiplié par deux ;
- la figure 8 représente un modèle de caricature pour un bit isolé selon la présente invention ;
- la figure 9 représente différents autres modèles possibles.

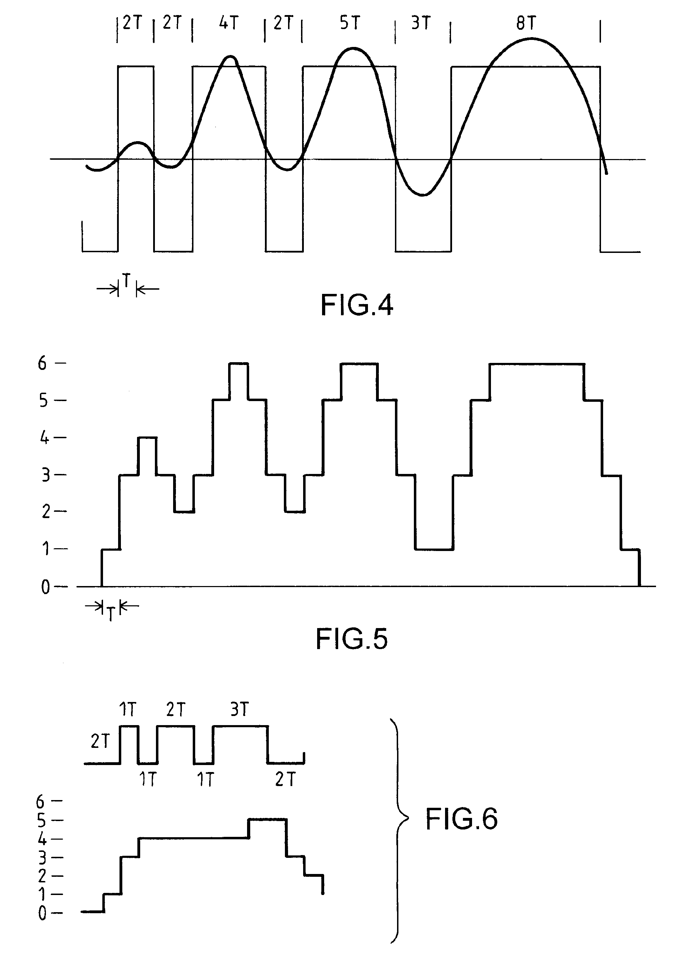

Sur la figure 4 on a représenté un exemple de séquence binaire enregistrée sous forme de marques physiques dont la longueur correspond à un nombre de bit successifs au même niveau haut, et de distances entre marques dont la longueur correspond à un nombre de bits successifs au niveau 0. On notera 2,2,2,4,2,5,3,8, cette séquence, cette notation signifiant que la séquence comporte successivement 2 bits au niveau bas, 2 bits de niveau haut, 2 bits de niveau bas, 4 bits hauts, 2 bits bas, 5 bits hauts, 3 bits bas, 8 bits hauts.

La durée d'un bit est égale à une durée T d'échantillonnage des signaux de lecture utilisés dans la méthode PRML.

La courbe analogique tracée sur la même figure représente à titre d'illustration une convolution de cette séquence binaire avec la réponse (modélisée en analogique) du canal d'enregistrement et lecture des informations stockées ; la modélisation prend en compte toutes les imperfections de bande passante de la tête de lecture, mais elle prend aussi en compte le fait que les bords des marques physiques ne sont pas des bords francs ; pour simplifier, on parlera de modélisation de la tête de lecture, alors qu'en réalité il s'agit d'une modélisation de la réponse de tout le canal d'information allant de l'information binaire à enregistrer au signal analogique de lecture qui servira à restituer l'information binaire.

La courbe analogique représentant la convolution de l'information binaire avec la réponse de la tête de lecture a été représentée en phase avec le signal d'information binaire pour mieux faire comprendre la relation entre eux. Cette courbe analogique représente en quelque sorte le signal analogique de lecture typique (sans effet de super-résolution) qui pourrait être issu d'une tête de lecture réelle sous laquelle défile la séquence binaire.

La figure 5 représente symboliquement une courbe en escalier qui résulte de la modélisation numérique de la réponse de la tête de lecture à la même séquence binaire, en utilisant comme modèle numérique de base pour un bit d'information isolée le modèle 1,2,2,1 de durée 4T de la figure 1. La courbe en escalier qui est représentée est une courbe simplifiée pour garder une lisibilité suffisante du schéma. La courbe réelle calculée serait différente de celle qui est représentée.

Il y a une ressemblance entre la courbe en escalier de la figure 5 et la courbe analogique de la figure 4 dès lors que le modèle 1,2,2,1 a une certaine ressemblance avec la réponse réelle de la tête de lecture à un bit d'information isolé, et on comprend que le modèle de la figure 5 peut servir dans une méthode PRML à décoder un signal de lecture qui aurait l'allure analogique représentée à la figure 4.

Mais si on voulait garder le même modèle pour détecter des séquences binaires constituées à partir de marques plus courtes, par exemple des longueurs égale à un bit (durée T), en supposant que la super-résolution fournit un signal analogique représentatif de ces marques courtes, ce modèle ne serait plus efficace. La figure 6 représente à titre d'exemple le modèle caricatural d'une séquence binaire 2T, 1T, 2T, 1T, 3T, 2T. La caricature obtenue, toujours avec le modèle 1,2,2,1 de la figure 1 ne fait même plus apparaître de creux et de bosses qui auraient quelques ressemblances avec un signal analogique obtenu en super-résolution.

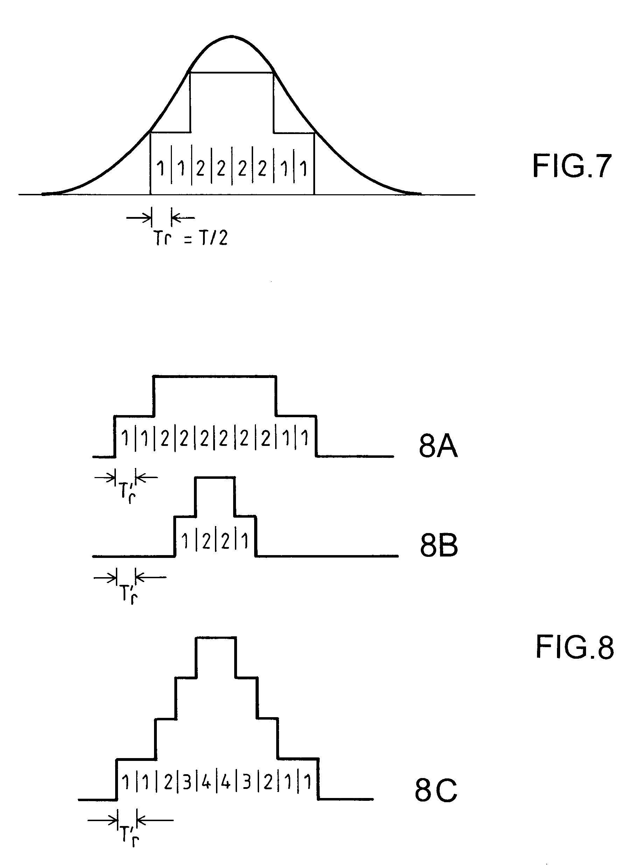

La figure 7 représente un modèle très proche de celui de la figure 1. Ce modèle est différent en ce qu'on a simplement doublé la fréquence d'échantillonnage en conservant cependant la même durée globale pour la représentation de la réponse à un bit isolé du fait qu'on n'a pas changé la taille de la tache de focalisation du laser ni la longueur d'un bit (durée T). Les deux niveaux de valeur 1 et 2 sont conservés. Le modèle s'étend donc sur N=8 valeurs non nulles au lieu de 4. Le modèle est 1,1,2,2,2,2,1,1. La période d'échantillonnage est Tr=T/2 si T était la période d'échantillonnage dans le cas de la figure 5.

Si on effectue avec ce modèle de bit isolé un calcul de modèle de séquence binaire correspondant aux mêmes longueurs réelles de marques qu'à la figure 5, c'est-à-dire un signal correspondant à une séquence binaire qui n'est plus 2,2,2,4,2,5,3,8, mais qui devient 4,4,4,8,4,10,6,16 puisque une longueur de marque minimale de durée 2T correspond maintenant à quatre bits de durée Tr=T/2, on obtiendra une qualité de caricature meilleure que celle de la figure 5 (plus fine) mais n'apportant pas grand chose de plus sinon des calculs beaucoup plus lourds.

Mais si on cherche alors à faire une lecture de marques en super-résolution, c'est-à-dire par exemple des marques de longueur deux fois plus courtes, soit une durée de 2 bits et non plus 4, la séquence binaire redevient 2,2,2,4,2,5,3,8 avec la période réduite Tr=T/2 si on utilise le modèle 1,1,2,2,2,2,1,1 de la figure 7. Dans ce cas, on constate que le modèle calculé ne permettrait toujours pas de distinguer des marques proches et courtes, de durée deux bits, alors que des mesures effectuées en super-résolution semblent montrer que des marques de très petite taille donnent lieu à un signal analogique permettant de distinguer la présence de telles marques très courtes.

On peut faire les mêmes constatations à partir du modèle 1,2,2,2,1 de la figure 2. II permet de caricaturer correctement une séquence 2,2,2,4,2,5,3,8 avec une période T' (égale à environ 4/5 de T) où la longueur et l'espacement minimal des marques est 2T'. Mais il ne permet pas de caricaturer le signal issu de la lecture en super-résolution de marques de durée et espacement beaucoup plus courts tels que T'. Le choix d'un modèle déduit du modèle de la figure 2 mais dédoublé en 1,1,2,2,2,2,2,2,1,1 avec une durée d'échantillonnage Tr'=T'/2 améliore un peu la lecture de marques de durée 2T', comme le faisait le modèle de la figure 7, mais on constate qu'il ne permet toujours pas de caricaturer correctement la lecture en super-résolution de marques de durée ou espacement T'.

La figure 8 représente un modèle caricatural de bit isolé proposé par la présente invention. Ce modèle résulte de la superposition d'un premier modèle (ligne 8A) à P₁ = 10 échantillons de N₁=2 deux valeurs qui sont 1 et 2, et d'un deuxième modèle (ligne 8B), centré sur le premier, à P₂ = 4 échantillons de N₂ = 2 valeurs 1 et 2. Le premier modèle est le modèle 1,1,2,2,2,2,2,2,1,1. Le deuxième modèle est le modèle 1,2,2,1. Le modèle résultant de l'addition des deux premiers est le modèle (ligne 8C) 1,1,2,3,4,4,3,2,1,1, à P=10 échantillons et N=4 valeurs 1,2,3,4. La période d'échantillonnage est désignée par T'r, en principe un peu plus petite que Tr.

On a constaté que ce modèle pouvait mieux rendre compte d'une lecture en super-résolution parce qu'il prend en compte à la fois une largeur de tache de focalisation laser qui couvre une largeur équivalente à une dizaine de bits d'information et une sensibilité de signal de retour plus importante au centre de la tache de focalisation du fait de la super-résolution.

Plus généralement, on peut constituer d'autres modèles voisins qui ont les mêmes avantages, par superposition d'un modèle de gaussienne large (au moins six échantillons non nuls) à deux niveaux et d'un modèle de gaussienne plus étroite (pas plus de quatre échantillons non nuls) à deux niveaux aussi. Le modèle résultant a au moins six échantillons et un maximum de quatre ou cinq niveaux).

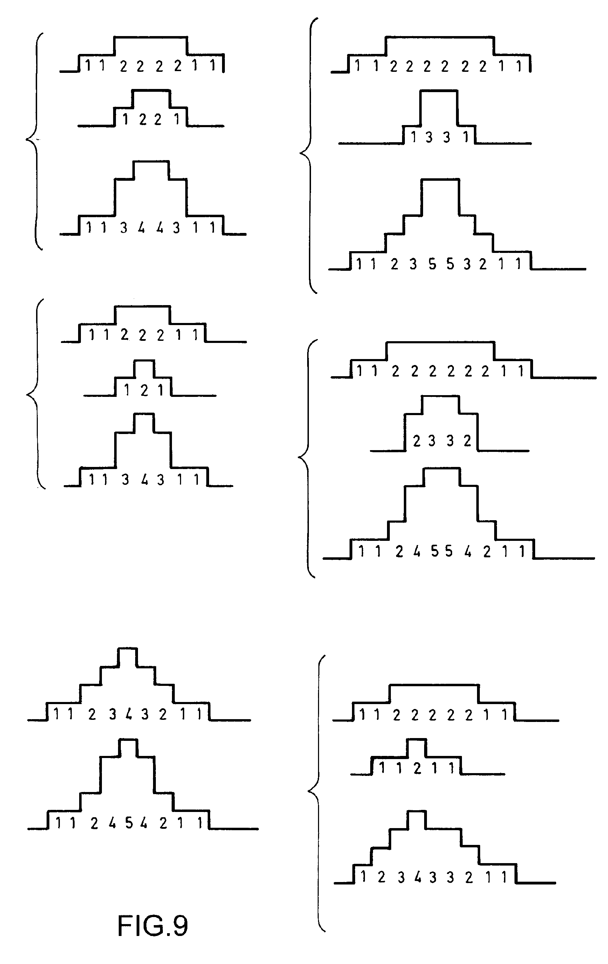

La figure 9 représente des modèles de caricature de bits isolés possibles selon l'invention :
Structures à nombre pair d'échantillons :
   1,1,3,4,4,3,1,1, superposition de modèle simple de gaussienne large 1,1,2,2,2,2,1,1 et du modèle de gaussienne étroite 1,2,2,1
   1,1,2,3,5,5,3,2,1,1, superposition du modèle simple de gaussienne large 1,1,2,2,2,2,2,2,1,1 et du modèle de gaussienne étroite 1,3,3,1
   1,1,2,4,5,5,4,2,1,1, superposition du modèle simple de gaussienne large 1,1,2,2,2,2,2,2,1,1 et du modèle de gaussienne étroite 2,3,3,2
Structures à nombre impair d'échantillons :
   1,1,3,4,3,1,1 superposition du modèle simple de gaussienne large 1,1,2,2,2,1,1 et du modèle de gaussienne étroite 1,2,1
   1,1,2,3,4,3,2,1,1, superposition du modèle simple de gaussienne large 1,1,2,2,2,2,2,1,1 et du modèle de gaussienne étroite 1,2,1
   1,1,2,4,5,4,2,1,1, superposition du modèle simple de gaussienne large 1,1,2,2,2,2,2,1,1 et du modèle de gaussienne étroite 2,3,2

Enfin, à la limite, si on voulait minimiser le nombre N d'échantillons au total, on pourrait prendre N=5 et utiliser le modèle 1,2,4,2,1 dont le pic central au niveau 4 représente l'activité optique supplémentaire marquée au centre du faisceau laser ; ce modèle peut être considéré comme l'addition d'un modèle de gaussienne simple 1,2,2,2,1 et d'un modèle encore plus simple (0),2,(0) de gaussienne étroite localisée au centre de la première.

Ces modèles sont symétriques mais on peut envisager un modèle dissymétrique, par exemple 1,2,3,4,3,3,2,1,1 obtenu par l'addition d'un modèle 1,1,2,2,2,2,2,1,1 et d'un modèle 1,1,2,1,1 non centré sur le premier (décalage d'une période T vers la gauche).

La dissymétrie peut être utile pour tenir compte de phénomènes physiques tels que par exemple un temps de réponse des matériaux de couche active pour prendre un état différent sous l'effet de l'illumination par le centre du faisceau laser. La dissymétrie peut être dans un sens ou dans un autre selon le phénomène qu'il paraît utile de prendre en compte. Un décalage de deux périodes T vers la gauche plutôt qu'une période est également possible pour aboutir au modèle dissymétrique 2,2,4,3,3,2,2,1,1. Ou encore un décalage d'une période T vers la droite pour aboutir au modèle 1,1,2,3,3,4,3,2,1 ou un décalage de deux périodes vers la droite pour aboutir au modèle 1,1,2,2,3,3,4,2,2.

Quel que soit le modèle choisi, on l'utilise de la manière habituelle pour un traitement PRML : on recueille une succession de K échantillons d'un signal analogique résultant d'une lecture réelle d'une séquence d'informations binaires enregistrées, on calcule des modèles de réponse à des séquences binaires possibles de K échantillons, on mesure la ressemblance entre la succession reçue et chacune des successions calculées, et on en déduit quelle était probablement la séquence binaire enregistrée compte-tenu de la meilleure ressemblance trouvée.

La ressemblance est de préférence mesurée par une méthode des moindres carrés dans laquelle :
- on calcule, pour une succession d'échantillons déterminée, la somme des carrés des différences entre chaque échantillon de la succession reçue et l'échantillon correspondant de la succession calculée,
- on recommence pour toutes les successions calculées possibles,
- on compare les différentes sommes de carrés calculées,
- et on sélectionne parmi toutes les successions binaires possibles celle qui donne la plus petite somme de carrés.

## Revendications

1. Procédé de lecture d'informations numériques inscrites dans des couches d'un support de stockage optique d'informations pouvant être lu en super-résolution à partir d'un système optoélectronique comprenant un faisceau laser de lecture dont la densité de puissance en son centre est suffisante pour engendrer une modification locale des propriétés optiques d'au moins une des couches sur une zone plus petite que la résolution du système optoélectronique, le procédé comportant la modélisation de la réponse fournie par des séquences binaires variées à partir de la modélisation de la réponse partielle fournie par un bit d'information isolé, et la recherche du maximum de ressemblance entre une séquence d'échantillons issus de la lecture des informations et les réponses des séquences variées modélisées, ce procédé étant **caractérisé en ce que** le modèle correspondant à un bit isolé, à partir duquel sont établis les modèles pour les séquences binaires variées, est constitué par la superposition d'un premier modèle simple représentant une gaussienne représentative de la distribution spatiale d'énergie d'un faisceau laser de lecture et d'un deuxième modèle simple représentatif d'une gaussienne plus étroite que la première et représentative d'une action optique supplémentaire limitée à la partie centrale du faisceau laser.

2. Procédé de lecture d'informations numériques inscrites dans des couches d'un support de stockage optique d'informations pouvant être lu en super-résolution à partir d'un système optoélectronique comprenant un faisceau laser de lecture dont la densité de puissance en son centre est suffisante pour engendrer une modification locale des propriétés optiques d'au moins une des couches sur une zone plus petite que la résolution du système optoélectronique, le procédé comportant la modélisation de la réponse fournie par des séquences binaires variées à partir de la modélisation de la réponse partielle fournie par un bit d'information isolé, et la recherche du maximum de ressemblance entre une séquence d'échantillons issus de la lecture des informations et les réponses des séquences variées modélisées, ce procédé étant **caractérisé en ce que** le modèle correspondant à un bit isolé, à partir duquel sont établis les modèles pour les séquences binaires variées, est constitué par P échantillons de valeurs non nulles où les valeurs non nulles sont prises parmi N valeurs possibles, le nombre P étant d'au moins 6 et le nombre N étant compris entre 3 et 5.

3. Procédé de lecture selon la revendication 2, **caractérisé en ce que** le nombre P est compris entre 7 et 10.

4. Procédé de lecture selon l'une des revendications 2 et 3, **caractérisé en ce que** le nombre N est égal à 4.

5. Procédé selon l'une des revendications 1 à 4, **caractérisé en ce que** le modèle correspondant à un bit isolé est constitué par la superposition additive de deux modèles simples ayant chacun deux niveaux non nuls possibles, l'un ayant un nombre P₂ d'échantillons voisin de la moitié du nombre P₁ d'échantillons de l'autre, les échantillons du deuxième modèle étant pris aux mêmes instants que des échantillons du premier modèle.

6. Procédé selon la revendication 5, **caractérisé en ce que** le premier modèle comporte P₁ = 7 ou 8 échantillons non nuls avec N₁ = 2 valeurs nominales qui sont les valeurs 1 et 2 et le deuxième modèle comporte P₂ = 3 ou 4 échantillons non nuls avec N₂ = 2 valeurs nominales prises parmi les valeurs 1, 2 et 3.

7. Procédé selon l'une des revendications 1 et 2, **caractérisé en ce que** le modèle pour un bit isolé est pris parmi les modèles suivants :
- 1,1,3,4,4,3,1,1
- 1,1,2,3,5,5,3,2,1,1
- 1,1,2,4,5,5,4,2,1,1
- 1,1,3,4,3,1,1
- 1,1,2,3,4,3,2,1,1
- 1,1,2,4,5,4,2,1,1
- 1,2,3,4,3,3,2,1,1
- 1,1,2,3,3,4,3,2,1
- 2,2,4,3,3,2,2,1,1,
- 1,1,2,2,3,3,4,2,2.

8. Procédé selon l'une des revendications 5 et 6, **caractérisé en ce que** le modèle pour un bit isolé est dissymétrique, constitué par la superposition de deux modèles simples symétriques dont l'un est décalé en avance ou en retard par rapport au centre de symétrie temporelle de l'autre.

9. Procédé selon l'une des revendications 1 à 8, **caractérisé en ce qu'**on recueille une succession de K échantillons d'un signal analogique résultant d'une lecture réelle d'une séquence d'informations binaires enregistrées, on calcule des modèles de réponse à des séquences binaires possibles de K échantillons, on mesure la ressemblance entre la succession reçue et chacune des successions calculées, et on en déduit quelle était probablement la séquence binaire enregistrée compte-tenu de la meilleure ressemblance trouvée.

10. Procédé selon la revendication 9, **caractérisé en ce que** la ressemblance est mesurée par une méthode des moindres carrés dans laquelle :
- on calcule, pour une succession d'échantillons déterminée, la somme des carrés des différences entre chaque échantillon de la succession reçue et l'échantillon correspondant de la succession calculée,
- on recommence pour toutes les successions calculées possibles,
- on compare les différentes sommes de carrés calculées,
- et on sélectionne parmi toutes les successions binaires possibles celle qui donne la plus petite somme de carrés.
